# EUROPEAN PATENT APPLICATION

(11) **EP 3 412 567 A1**
(43) Date of publication of application: **12.12.2018**
(21) Application number: 17174996.3
(22) Date of filing: 08.06.2017
(51) Int. Cl.: B64C 29/00, B64C 39/06, B64C 11/00

(54) **AERIAL VEHICLE**

(71) Applicant: Airbus Defence and Space GmbH, 82024 Taufkirchen (DE)
(72) Inventor: CVRLJE, Tomislav, 81929 München (DE)
(74) Representative: Isarpatent

(57) **Abstract**

An aerial vehicle (1) is described, wherein the aerial vehicle includes a fuselage (2) defining a longitudinal axis (L), a closed wing structure (5) with a pair of lower wings (51; 52) being coupled to the fuselage (2), an upper wing device (53), and a pair of connector wings (54; 55) connecting the pair of lower wings (51; 52) and the upper wing device (53). The aerial vehicle (1) further includes a pair of front propulsion devices (6; 7) being coupled to the fuselage (2), and a pair of rear propulsion devices (8; 9) being pivotally coupled to the fuselage (2), wherein the pair of rear propulsion devices (8; 9) is arranged between the pair of lower wings (51; 52) and the upper wing device (53), and wherein the pair of rear propulsion devices (8; 9) is pivotal between a take-off position and a cruise position.

## Description

### FIELD OF THE INVENTION

The present invention pertains to an aerial vehicle, in particular to a vertical take-off and landing vehicle, briefly VTOL, in particular to a personalized transport utilization aerial vehicle with high cruising speed capability.

### BACKGROUND OF THE INVENTION

The prospective demographic growth and increasing wealth will multiply the transport demand within and across countries. In view of this development combined with the further trend of urbanisation and agglomeration, an efficient and effective transport of passengers or cargo to a desired location, in particular for traveling distances in a range between 30 kilometres and 300 kilometres will become increasingly important. Currently, individual and personalised transportation in the above range of distances is typically performed by means of ground bound shuttle and taxi services, such as cars, busses, trains, or similar.

Aerial vehicles seem to be a promising alternative to ground bound transportation. In particular vertical take-off and landing vehicles, abbreviated as "VTOL" in the following, seem to be an interesting technology since these aerial vehicles are able to provide a safe landing and take-off in areas with limited space for manoeuvring. A VTOL for passenger and cargo transportation is described for example in WO 2015/019255 A1. This known VTOL is realized with a so called boxwing configuration which comprises parallel, vertically and horizontally spaced wings that are jointed with each other at outer ends by means of vertical connectors. Rotors are embedded within apertures of the wings and may tilt therein.

### SUMMARY OF THE INVENTION

It is an aspect of the present invention to provide an improved aerial vehicle, in particular with respect to aerodynamic properties and/or manoeuvrability for passengers and cargo transportation.

This aspect is achieved by an aerial vehicle comprising the features according to claim 1.

The aerial vehicle according to the invention comprises a fuselage, a closed wing structure, a pair of front propulsion devices, and a pair of rear propulsion devices. The aerial vehicle briefly is recited as "VTOL" in the following, wherein VTOL stands for vertical take-off and landing.

The fuselage is realized as a longitudinally extending body and thus defines a longitudinal axis of the aerial vehicle. In particular, the fuselage may define an interior provided as passenger cabin or cargo compartment.

The closed wing structure is coupled to the fuselage, in particular to a rear end portion of the fuselage with respect to the longitudinal axis. The closed wing structure comprises a pair of lower wings, an upper wing device, and a vertical joint structure including first and second connector wings. The pair of lower wings is coupled to the fuselage. In particular, the lower wings extend transversely to the fuselage and protrude from opposite sides of the fuselage. The upper wing device is spaced to the pair of lower wings with respect to the longitudinal axis and with respect to a vertical direction extending transverse to the longitudinal axis. Thus, the upper wing device spans over the fuselage, in particular over an upper side of the fuselage. The pair of connector wings mechanically connects the pair of lower wings and the upper wing device. The upper wing device, the lower wings, the connector wings, and the fuselage together define a closed frame. This closed configuration in particular comprises improved drag properties of the entire aerial vehicle. Further, due to the vertical spacing of the upper wing device and the pair of lower wings, a large aerial expanse of the wing structure is available for generating lift force and is realized with a very compact design.

The pair of front propulsion devices being coupled to the fuselage, in particular in the region of a front end portion of the fuselage. The pair of front propulsion devices comprises a direction of thrust which is oriented along or substantially along the vertical direction. That is, the pair of front propulsion devices provide for lift in particular in the take-off phase.

The pair of rear propulsion devices is pivotally coupled to the fuselage, wherein the pair of rear propulsion devices is arranged between the pair of lower wings and the upper wing device with respect to the vertical direction and with respect to the longitudinal axis. The rear propulsion devices thus are arranged substantially within the closed frame of the closed wing structure. This ensures a compact design of the VTOL. Further, this configuration helps to reduce drag and to improve lift of the closed wing structure since mechanically coupling of the propulsion device to the closed wing structure is omitted. In other words, a aerodynamically clean wing is provided.

Further, the pair of rear propulsion devices is pivotally mounted to the fuselage. In particular, the pair of rear propulsion devices is pivotal or movable between a take-off position, in which a direction of thrust of the pair of rear propulsion devices is oriented along or substantially along the vertical direction, and a cruise position, in which the direction of thrust of the pair of rear propulsion devices is oriented along or substantially along the longitudinal axis. That is, during take-off, the rear propulsion devices transport fluid or air along the vertical direction in order to produce lift. Positioning of the rear propulsion device between the upper wing device and the pair of lower wings of the closed wing structure helps to generate an airflow in this area during take-off. Thereby, the transition from take-off mode to cruise mode is improved.

A "direction of thrust" of the front and/or rear propulsion devices may in particular be defined as the direction along which a driving force generated by the propulsion devices is oriented. In particular, this direction may be oriented contrary to a main flow direction of fluid which is exhausted by and accelerated through the propulsion devices.

Advantageous embodiments of the invention will become apparent from the dependent claims in the context of the description.

According to one embodiment, the aerial vehicle optionally further comprises a pair of canard wings being coupled to the fuselage, wherein the pair of front propulsion devices are arranged adjacent to the pair of canard wings with respect to the longitudinal axis. In particular, the pair of canard wings or front wings are coupled to the front end portion of the fuselage and each of the wings of the pair of canard wings extends from the fuselage along a canard wing longitudinal axis transverse to the longitudinal axis of the fuselage at opposite sides of the fuselage. The front propulsion devices are arranged between the closed wing structure and the pair of canard wings with respect to the longitudinal axis. The pair of canard wings improve aerodynamic stability. Since the front propulsion devices are position directly adjacent to the pair of canard wings, the front propulsion devices cause an airflow over the canard wings, in particular in their take-off position. Advantageously, an additional lift force is generated by the canard wings.

According to one embodiment, the pair of optional canard wings is pivotally mounted to the fuselage. In particular, the canard wings are pivotally mounted or rotatable about the canard wing longitudinal axis which thus forms a pivot axis. Thus, in this embodiment, the canard wings form control surfaces which further improves the manoeuvrability of the VTOL.

According to one embodiment, the aerial vehicle optionally further comprises a vertical stabilizer or fin which extends along or substantially along the vertical direction and couples the upper wing device of the closed wing structure to the fuselage. The vertical stabilizer protrudes from an upper side of the fuselage and mechanically couples the upper wing device to the fuselage. This improves mechanical stability of the main wing. Further, the vertical stabilizer provides space for installing aerodynamic control surfaces and further improves the aerodynamic behaviour of the aerial vehicle.

According to one embodiment, the upper wing device comprises a first upper wing and a second upper wing, wherein the first upper wing extends between the vertical stabilizer and the first connector wing, and wherein the second upper wing extends between the vertical stabilizer and the second connector wing. Hence, the upper wing device is assembled from two separate wings, each of which extending to opposite sides of the vertical stabilizer and being coupled thereto at a respective first end. A second end of the first upper wing is coupled to the first connector wing extending from the lower wing at the respective side of the vertical stabilizer. A second end of the second upper wing is coupled to the second connector wing extending from the lower wing at the respective side of the vertical stabilizer.

According to one embodiment, the aerial vehicle optionally further comprises a skid device mounted to a lower side of the fuselage. The skid device provides the benefit that the aerial vehicle may take-off and land without special requirements for the ground floor. In particular, no special runways are needed. Further, skids are very lightweight and cost efficient compared to wheels.

According to one embodiment, the front propulsion devices are realized as shrouded or ducted propellers. That is, the front propulsion devices comprise a propeller and a ring shaped or annular shroud or housing, respectively, wherein the shroud circumferentially encircles or encases the propeller. According to this embodiment, the propeller is arranged within the interior of a cylindrical shroud or nacelle. The shroud thus comprises an intake opening through which the propeller sucks fluid and an exhaust opening through which the propeller exhausts the fluid and thereby generates thrust. With a shrouded configuration, the VTOL is provided with minimum ecological impact, i.e. low noise signature, low emission effect and low fuel energy consumption compared to any helicopter configuration, however with enhanced comfort of low vibration and high safety.

The shroud or housing of the respective front propulsion device may in particular comprise a cross-sectional shape configured to generate a force comprising a vector component along the longitudinal axis when air is drawn through the shroud by the propeller. Thus, the shroud or housing comprises a cross-section defining an airfoil. For example, the shroud may be geometrically divided along the longitudinal axis of its cylindrical shape into two half cylinders or half shells. Each half shell, in particular the wall forming the respective half shell, comprises a cross-sectional shape or profile arranged to generate a force component, wherein a suction side of cross-sectional profile of both half shells are oriented substantially in the same direction. In the take-off position of the front propulsion devices, the shroud helps to accelerate the VTOL substantially along the direction of the longitudinal axis which further eases the transition from take-off to cruise.

According to one embodiment, the rear propulsion devices are realized as shrouded or ducted propellers. That is, the rear propulsion devices comprise a propeller and a ring shaped or annular shroud or housing, respectively. The shroud or housing circumferentially encircles or encases the propeller. As already discussed with respect to the front propulsion devices, the shrouded or ducted configuration in particular lowers the noise of the propulsion engines and helps to ensure constant conditions of the incoming flow of fluid to the propeller.

The shroud of the respective rear propulsion device may in particular comprise a cross-sectional shape configured to generate a force comprising a vector component along or substantially along the vertical direction when air is drawn through the shroud by the propeller and when the pair of rear propulsion devices is in its cruise position. In this embodiment, the shrouds of the rear propulsion devices form airfoils. Depending on the orientation of the suction and pressure sides of the airfoil cross-sectional shape, the vector component along or substantially along the vertical direction leads to positive or negative lift in the cruise mode. In the cruise position or mode of the rear propulsion devices, an additional vector component of the force which is oriented along or substantially along the longitudinal axis when air is drawn through the shroud by the propeller helps to accelerate the VTOL substantially along the direction of the longitudinal axis.

In take-off mode of the rear propulsion devices, the shroud of the rear propulsion devices provide a vector component along or substantially along the vertical direction leading to lift and - depending on the orientation of the suction and pressure sides of the airfoil cross-sectional shape - to an additional vector component along the longitudinal axis to accelerate or decelerate the VTOL substantially along the direction of the longitudinal axis.

Consequently, according to this embodiment, the shrouds help to generate additional lift forces. The shroud may for example be geometrically divided as has already be discussed above in connection with the front propulsion devices.

According to a further embodiment, the front propulsion devices and/or the rear propulsion devices comprise a first propeller which is configured to rotate in a first rotation direction and a second propeller which is configured to rotate in a second rotation direction contrary to the first rotation direction. Thus, the propulsion devices may comprise two axially spaced counter rotating propellers. Thereby, a very powerful propulsion may be achieved with very compact design of the devices.

According to one embodiment, the aerial vehicle optionally further comprises an electrical energy storage device, for example an accumulator or battery, wherein the front propulsion devices and/or the rear propulsion devices comprise an electrically drivable motor, respectively, electrically connected to the electrical energy storage device. According to this embodiment, an electrical propulsion system is realized for the VTOL. In particular, the propulsion devices are operable by means of electric energy which is stored in the electrical energy storage device. This further reduces noise emission and advantageously substantially completely avoids carbon dioxide emission during operation of the VTOL.

According to one embodiment, the aerial vehicle optionally further comprises a charging system for charging electrical energy storage device, wherein the charging system preferably comprises an internal combustion engine driving an electric generator which is electrically connected to the electrical energy storage device. That is, an on board charging system is provided which helps to increase the cruising range of the VTOL In particular, security of the VTOL is improved since the electrical energy storage device may be charged during flight.

According to one embodiment, the VTOL optionally further comprises one or more deployable parachutes. The at least one parachute, for example, may be coupled to the fuselage and may be automatically deployed in case of a breakdown of one or more of the front and/or rear propulsion devices, in order to safely land the VTOL.

With respect to directions and axes, in particular with respect to directions and axes concerning the extension or expanse of physical structures, within the scope of the present invention, an extension of an axis, a direction, or a structure "along" or "substantially along" another axis, direction, or structure includes in particular that said axes, directions, or structures, in particular tangents which result at a particular site of the respective structures, enclose an angle which is smaller or equal than 45 degrees, preferably smaller or equal than 30 degrees and in particular preferable extend parallel to each other.

With respect to directions and axes, in particular with respect to directions and axes concerning the extension or expanse of physical structures, within the scope of the present invention, an extension of an axis, a direction, or a structure "crossways", "across", "cross", "transverse" to another axis, direction, or structure includes in particular that said axes, directions, or structures, in particular tangents which result at a particular site of the respective structures, enclose an angle which is greater than 45 degrees, preferably greater than 60 degrees, and in particular preferable extend perpendicular to each other.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates an perspective view of an aerial vehicle according to an embodiment of the invention.
- Fig. 2: schematically illustrates a side view of the aerial vehicle shown in Fig. 1, wherein rear propulsion devices of the aerial vehicle are shown in a cruise position.
- Fig. 3: schematically illustrates a side view of the aerial vehicle shown in Fig. 1, wherein rear propulsion devices of the aerial vehicle are shown in a take-off position.
- Fig. 4: schematically illustrates a cross-sectional view of a front propulsion device and a canard wing of an aerial vehicle according to an embodiment of the invention.
- Fig. 5: schematically illustrates a cross-sectional view of a front propulsion device and a canard wing of an aerial vehicle according to another embodiment of the invention.
- Fig. 6: schematically illustrates a cross-sectional view of a rear propulsion device and a main wing structure of an aerial vehicle according to an embodiment of the invention.
- Fig. 7: schematically illustrates a cross-sectional view of a rear propulsion device and a main wing structure of an aerial vehicle according to another embodiment of the invention.
- Fig. 8: schematically illustrates a plane view to an intake opening of an embodiment of a propulsion device which may be a front or a rear propulsion device, wherein the propulsion device is realized as a shrouded propeller.
- Fig. 9: schematically illustrates a plane view to an intake opening of a further embodiment of a propulsion device which may be a front or a rear propulsion device, wherein the propulsion device is realized as a shrouded propeller.
- Fig. 10: schematically illustrates a cross-sectional view of a rear propulsion device and a main wing structure of an aerial vehicle according to a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF EMODIMENTS

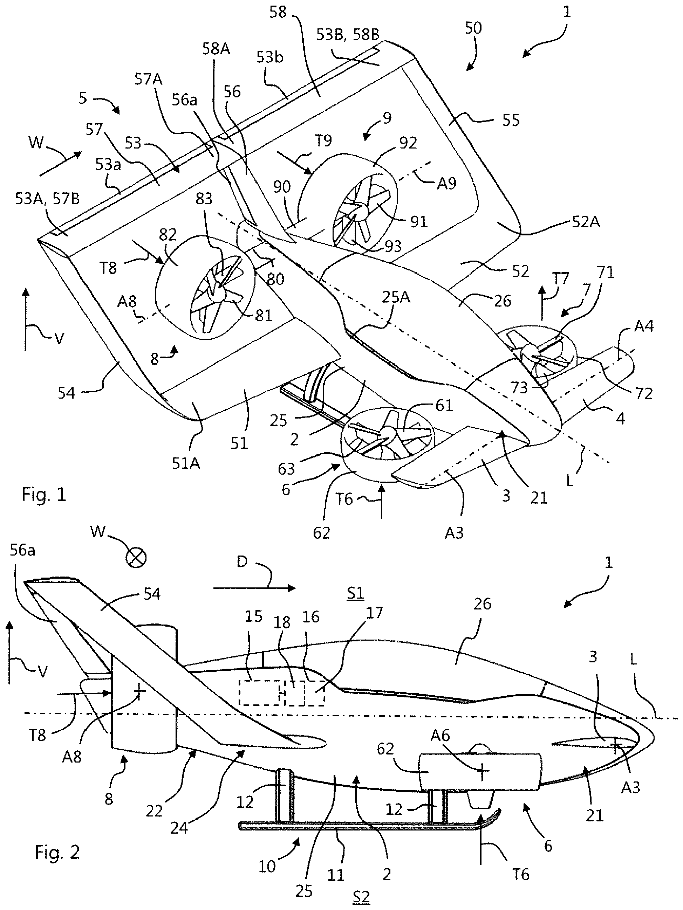

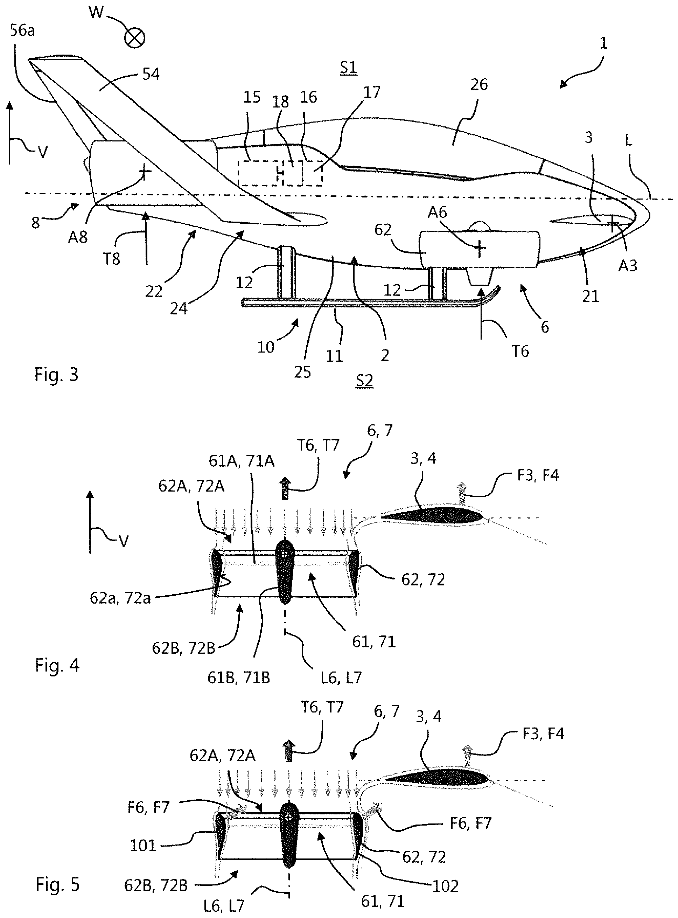

Fig. 1 shows an aerial vehicle 1 in an perspective view to an upper side S1 of the aerial vehicle. Fig. 2 and Fig. 3 show a side view of the aerial vehicle shown in Fig. 1. The aerial vehicle 1 comprises a fuselage 2, an optional pair of canard wings 3, 4, a closed wing structure 5, a pair of front propulsion devices 6, 7, and a pair of rear propulsion devices 8, 9. As is further shown in Fig. 1 and as may in particular be taken from Fig. 2 and Fig. 3, the aerial vehicle 1 may further comprise an optional skid device 10.

The fuselage 2 is realized as a body having a longitudinal shape or expanse which defines a longitudinal axis L of the aerial vehicle 1. As is schematically illustrated in Figs. 1, 2 and 3, the fuselage may comprise a main body 25 of longitudinal shape and a covering or door 26. The main body 25 defines an interior of the fuselage 2 which is provided as passenger compartment or as cargo compartment. The door 26 is configured to cover or uncover an opening 25A of the main body 25 which faces towards the upper side S1 of the aerial vehicle 1. The door 26 may be attached to the main body 25 by means of hinges (not shown) or similar such that said door 26 is movable between a closed position in which the door 26 covers the opening 25A as shown in Fig. 1 to 3 and an open position in which the door 26 is positioned clear the opening 25A. The door 26 may be made of a transparent material, in particular a plastic material or similar. The main body 25 may be made of a composite material, in particular a fibre reinforced plastic material.

As is shown further in Figs. 1 to 3, the closed wing structure 5 comprises a pair of lower wings 51, 52, an upper wing device 53, and a vertical joint structure 50. Optionally, the closed wing structure 5 further comprises a vertical stabilizer 56 or fin. The pair of lower wings 51, 52 is coupled to a rear end portion 22 of the fuselage 2. As is shown best in Fig. 2, the lower wings 51, 52 may in particular be attached to the fuselage 2 in a lower region 24 of the main body 25. The lower wings 51, 52 extend transverse to the fuselage 2 along or substantially along a wingspan direction W and protrude to opposite sides of the fuselage 2 with respect to the wingspan direction W.

The upper wing device 53 is spaced apart from the pair of lower wings 51, 52 with respect to the longitudinal axis L and with respect to a vertical axis or vertical direction V extending transverse to the longitudinal axis L along or substantially along the wingspan direction W. In particular, the upper wing device 53 is arranged on the upper side S1 of the fuselage 2 and extends substantially parallel to the pair of lower wings 51, 52.

The vertical joint structure 50 comprises a first connector wing 54 and a second connector wing 55. The first connector wing 54 mechanically couples the first lower wing 51 of the pair of lower wings 51, 52 and the upper wing device 53. In particular, the first connector wing 54 connects an outer end portion 51A of the first lower wing 51 facing away from the fuselage 2 with respect to the wingspan direction W to a first end portion 53A of the upper wing device 53. The second connector wing 55 mechanically couples the second lower wing 52 of the pair of lower wings 51, 52 and the upper wing device 53. In particular, the second connector wing 55 connects an outer end portion 52A of the second lower wing 52 facing away from the fuselage 2 with respect to the wingspan direction W to a second end portion 53B of the upper wing device 53.

The optional vertical stabilizer 56 extends along or substantially along the vertical direction V and mechanically couples the upper wing device 53 of the closed wing structure 5 to the fuselage 2. As is shown in Fig. 1, the vertical stabilizer 56 protrudes to the upper side S1. Further, the vertical stabilizer 56 may in particular be coupled to the main body 25 of the fuselage 2 in the region of the rear end portion 22 of the fuselage 2.
As is exemplarily shown in Fig. 1, the upper wing device 53 may optionally comprise a first upper wing 57 and a second upper wing 58. In particular, the upper wing device 53 may be assembled from the two separate first and second upper wings 57, 58, each of which extending to opposite sides of the vertical stabilizer 56 with respect to the wingspan direction W. A first end 57A of the first upper wing 57 is coupled to the vertical stabilizer 56. A second end 57B of the first upper wing 57B is coupled to connector wing 54. A first end 58A of the second upper wing 58 is coupled to the vertical stabilizer 56, too. A second end 58B of the second upper wing 58B is coupled to connector wing 55.

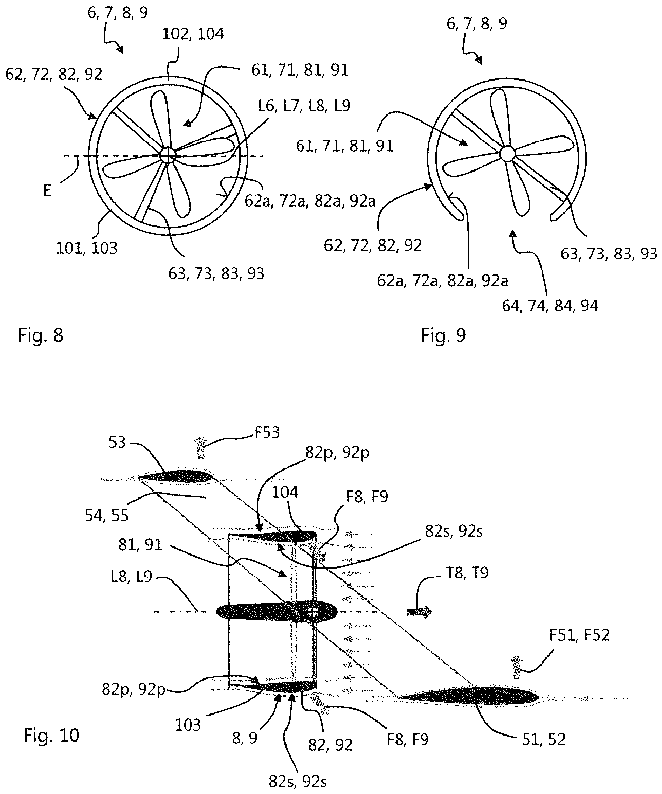

In particular, the upper wing device 53 and the pair of lower wings 51, 52 comprise a cross-sectional profile which is configured to generate a lift force F53, F51, F52 which is oriented along or substantially along the vertical direction V, when a fluid, such as ambient air, flows along the upper wing device 53 and the lower wings 51, 52 in a direction along the longitudinal axis L from a front end portion 21 of the fuselage 2 towards the rear end portion 22 of the fuselage 2, wherein the front end portion 21 lies opposite to the rear end portion 22 with respect to the longitudinal axis L. Such a cross-sectional profile, for example, may be an arc shaped profile as is exemplarily shown in Figs. 4 to 7 and in Fig. 10. As is shown in Fig. 1, the upper wing device 53 optionally comprises one or more control flaps or control surfaces 53a, 53b for manoeuvring of the VTOL. Further, a steering rudder 56a may be attached to the optional vertical stabilizer 56.

As shown further in Figs. 1 to 3, the optional canard wings 3, 4 are coupled to the front end portion 21 of the fuselage 2. The canard wings 3, 4 protrude from the fuselage 2 along or substantially along the wingspan direction W to opposite sides, respectively. Optionally, the pair of canard wings 3, 4 is pivotally mounted to the fuselage 2. In particular, the canard wings 3, 4 may be pivotally or rotatable mounted about a pivot axis A3, A4, respectively, wherein the pivot axes A3, A4 extend transverse to the longitudinal axis L and substantially along the wingspan direction W, respectively.

As shown in Figs. 1 to 3, the pair of front propulsion devices 6, 7 is coupled to the fuselage 2, in particular to the front end portion 21 of the fuselage 2. In particular, the pair of front propulsion devices 6, 7 is arranged adjacent to the pair of canard wings 3, 4 with respect to the longitudinal axis L. That is, the pair of front propulsion devices 6, 7 is arranged between the optional canard wings 3, 4 and the lower wings 51, 52 of the closed wing structure 5 with respect to the longitudinal axis L as becomes apparent best from Figs. 2 and 3. The pair of front propulsion devices 6, 7 comprises a direction of thrust T6, T7 which is oriented substantially along the vertical direction V. In operation, each of the front propulsion devices generates thrust which is directed towards the upper side S1 as is schematically indicated in Figs. 1 to 3 by the arrows indicating the respective direction of thrust T6, T7. Thereby, the front propulsion devices 6, 7 provide a lift force oriented in the direction of thrust which is particularly provided for take-off of the VTOL 1. As is exemplarily shown in Figs. 4 and 5, which will be described in more detail below, due to position of the front propulsion devices 6, 7 directly adjacent to the optional canard wings 3, 4, an airflow over the canard wings 3, 4 may be generated during a take-off phase of the VTOL 1 even though the horizontal velocity (along the longitudinal axis L) is substantially zero. This results in an additional lift force F3, F4 along the vertical direction V generated by the pair of canard wings 3, 4.

As is schematically illustrated in Figs. 1 to 3 and in Figs. 8 and 9, the front propulsion devices 6, 7 may in particular be realized as shrouded propellers. In this optional configuration, the front propulsion devices 6, 7 each comprise a propeller 61, 71 and a ring shaped housing or shroud 62, 72. As shown in Figs. 1 to 3 and in Fig. 8, the shroud 62, 72 may be realized as a closed ring which completely encircles or encases the propeller 61, 71. Alternatively, the ring shaped shroud 62, 72 may be realized as a ring section which at least partially encircles or encases the propeller 61, 71, as is exemplarily shown in Fig. 9, wherein a gap region 64, 74 is defined by the shroud 62, 72. For example, the shroud 62, 72 may extend over a circumferential angle of about 270 degrees. The gap region 64, 74 faces towards the rear end portion 22 of the fuselage 2.

As is shown best in Figs. 4 and 5, which show a cross-sectional view of the front propulsion device 6, 7, the shroud 62, 72 comprises an intake opening 62A, 72A and an axially spaced exhaust opening 62B, 72B. The propeller 61, 71 comprises blades 61A, 71A mounted to a rotatable shaft 61B, 71B. The front propulsion devices 6, 7 optionally comprise a first propeller 61, 71 and a second counter rotating propeller (not shown) which is spaced to the first propeller 61, 71 with respect to the propulsion device longitudinal axis L6, L7 . The first propeller 61, 71 and the optional second propeller (not shown) are mounted within the shroud 62, 72 by means of at least one strut 63, 73 which extends radially inwards from an inner circumferential surface 62a, 72a of the shroud 62, 72. As exemplarily shown in Figs. 1 and 8, the front propulsion devices 6, 7 may comprise three struts, respectively, which are circumferentially spaced at an angle of about 120 degrees. Of course, there may be provided a different number of struts 63, 73 with different angular spacing, for example two struts 63, 73, as exemplarily shown in Fig. 9. The struts 63, 73 are aerodynamically shaped. For example, the struts may be realized as blades so as to transform rotational energy of the fluid caused by the propeller 61, 71 into kinetic energy of the fluid. Further, the struts 63, 73 are hollow. This provides the advantage that mechanical and electrical service lines may be integrated within the struts 63, 73.

As exemplarily shown in Fig. 4, shroud 62, 72 may be realized with a profiled cross-sectional shape which is symmetrical with respect to the propulsion device longitudinal axis L6, L7. In particular, the cross-section of the walls of the shroud 62, 72 may be arc shaped.

Alternatively, as shown in Figs. 5 and 8, the shroud 62, 72 may be geometrically divided with respect to the a dividing plane E comprising the propulsion device longitudinal axis L6, L7. In this configuration, the shroud 62, 72 is divided in two sections with respect to its circumference. As exemplarily shown in Fig. 5, the cross-sectional shape of the walls of the shroud 62, 72 may be realized arc shaped, that is, in the shape of a wing profile comprising a pressure side and a suction side, wherein at one side of the dividing plane E the suction side faces towards the propulsion device longitudinal axis L6, L7 and at the opposite side of the dividing plane E the pressure side faces towards the propulsion device longitudinal axis L6, L7. In particular, in the take-off position of the front propulsion devices 6, 7 which is shown in Fig. 5, the suction sides of both sections of the shroud 62, 72 face towards the front end portion 21 of the fuselage 2 and the pressure sides of both sections of the shroud 62, 72 face towards the rear end portion 22 of the fuselage 2. In other words, the shroud 62, 72 may be divided in two sections along its circumference, wherein each section is formed by a half cylinder 101, 102 each of which comprising a circumferential expanse of somewhat less than 180 degree. A transition zone connects the two half cylinders 101, 102. Each half cylinder 101, 102 comprises a cross-sectional shape configured to generate lift when a fluid flows along the cylinder longitudinal axis L6, L7. In particular, one of the half cylinders at its outer surface forms a pressure side and at its inner surface forms a suction side, as is exemplarily shown in Fig. 5 for half cylinder 101. The other half cylinder - in Fig. 5 the half cylinder 102 - forms a suction side at its outer surface and at its inner surface forms a pressure side. Thereby, a force F6, F7 may be generated when air is transported through the shroud 62, 72 by the propeller 61, 71, wherein the force F6, F7 comprises a vector component transverse to the propulsion device longitudinal axis L6, L7 and thus being along the longitudinal axis L of the fuselage 2. Thereby, an additional forward thrust is advantageously generated. Further, the force F6, F7 comprises a vector component along the vertical direction V. Hence, in this exemplary configuration, the shroud 62, 72 comprises a cross-sectional shape configured to generate a force comprising a vector component along the longitudinal axis L when air is drawn through the shroud 62, 72 by the propeller 61, 71 which eases transition from take-off mode to cruise mode of the VTOL 1.

Also if the shroud 62, 72 is realized as a ring section, as exemplarily shown in Fig. 9, the cross-sectional shape of the walls of the shroud 62, 72 may be realized arc shaped, that is, in the shape of a wing profile comprising a pressure side and a suction side. In particular, the inner circumferential surface 62a, 72a of the shroud 62, 72 forms a pressure side and the outer circumferential surface of the shroud forms the suction side. Thus, also in this exemplary configuration, the shroud 62, 72 comprises a cross-sectional shape configured to generate a force comprising a vector component along the longitudinal axis L when air is drawn through the shroud 62, 72 by the propeller 61, 71 which eases transition from take-off mode to cruise mode. Further, the force F6, F7 may comprise a vector component along the vertical direction V.

As shown in Figs. 1 to 3, the pair of rear propulsion devices 8, 9 is arranged between the pair of lower wings 51, 52 and the upper wing device 53 with respect to the vertical direction V and with respect to the longitudinal axis L. Further, the rear propulsion devices 8, 9 are arranged at opposite sides of the fuselage 2 with respect to the wingspan direction W and are arranged between the fuselage 2 and the connector wings 54, 55, respectively. That is, the pair of rear propulsion devices 8, 9 are positioned substantially within the frame formed by the closed wing structure 5.

The pair of rear propulsion devices 8, 9 is pivotally coupled to the fuselage 2, for example by means of a rotatable interconnection beam or shaft 80, 90, respectively. In particular, the rear propulsion devices 8, 9 are pivotal or rotatable about a pivot axis A8, A9, respectively , wherein the pivot axes A8, A9 extend transverse to the longitudinal axis L and substantially along the wingspan direction W, respectively.

Each of the rear propulsion devices 8, 9 is pivotal or movable between a take-off position and a cruise position. Figs. 1 and 2 show the rear propulsion devices 8, 9 in the cruise position. In said cruise position, a direction of thrust T8, T9 of the respective rear propulsion device 8, 9 is oriented substantially along the longitudinal axis L so as to generate a driving force along the longitudinal axis L which drives the VTOL 1 with horizontal velocity. Fig. 3 shows the rear propulsion devices 8, 9 in the take-off position. In said take-off position, the direction of thrust T8, T9 of the respective rear propulsion device 8, 9 is oriented substantially along the vertical direction V so as to generate a lift force directed along the vertical direction V.

In operation, when the rear propulsion devices 8, 9 are positioned in the take-off position, as shown in Fig. 3, each of the rear propulsion devices 8, 9 generates thrust which is directed towards the upper side S1. The orientation of the respective direction of thrust T8, T9 is schematically shown in Figs. 1 to 3 by the arrows indicated with reference signs T8, T9. Thus, the rear propulsion devices 8, 9 provide a lift force which is particularly provided for take-off of the VTOL 1. When the VTOL 1 has reached a certain height level after take-off, the rear propulsion devices are brought to the cruise position shown in Figs. 1 and 2. In this cruise position each of the rear propulsion devices 8, 9 generates thrust which is directed along the longitudinal axis L thereby accelerating the VTOL 1 to its horizontal cruise velocity.

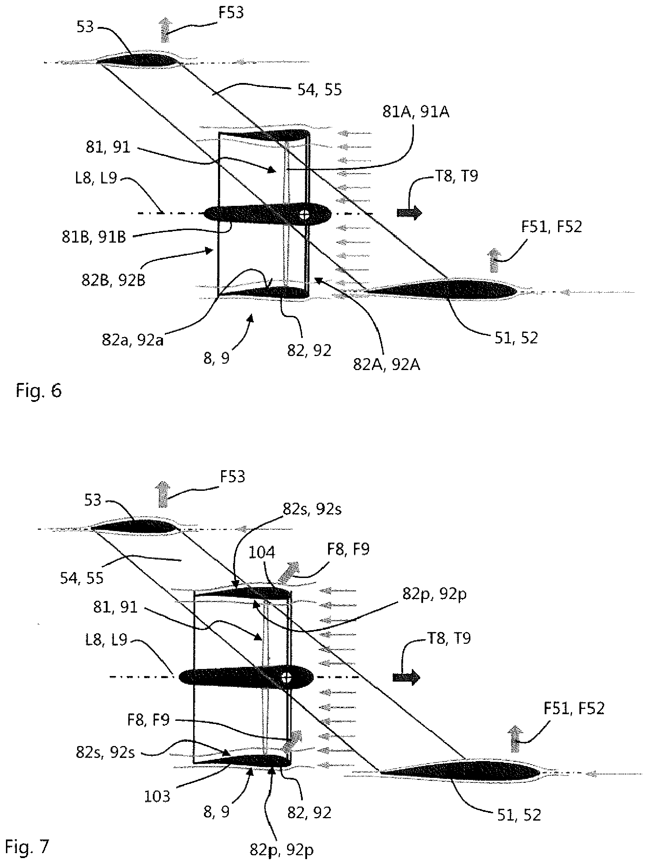

As is exemplarily shown in Figs. 6 and 7, which will be described in more detail below, depending on the position of the shrouded rear propeller propulsion devices 8, 9 relative to the pair of lower wings 51, 52 and the upper wing device 53, in particular there between, an airflow over the pair of lower wings 51, 52 and the upper wing device 53 may be generated during a take-off phase of the VTOL 1 even though the horizontal velocity (along the longitudinal axis L) is substantially zero. This results in an additional lift force F51, F52, F53 along the vertical direction V generated by the pair of lower wings 50, 51 and the upper wing device 53.

As shown in Figs. 1 to 3 and in further detail in Figs. 6 to 9, the rear propulsion devices 8, 9 optionally are realized as shrouded propellers comprising a propeller 81, 91 and a ring shaped housing or shroud 82, 92. As shown in Figs. 1 to 3 and in Fig. 8, the shroud 82, 92 may be realized as a closed ring which completely encircles or encases the propeller 81, 91. Alternatively, the ring shaped shroud 82, 92 may be realized as a ring section which at least partially encircles or encases the propeller 81, 91, as is exemplarily shown in Fig. 9, wherein a gap region 84, 94 is defined by the shroud 82, 92. For example, the shroud 82, 92 may extend over a circumferential angle of about 270 degrees. The gap region 84, 94 faces towards the lower side S2 of the VTOL 1 in the cruise position of the rear propulsion devices 8, 9. In the take-off position of the rear propulsion devices 8, 9, the gap region 84, 94 faces towards the front end portion 21 of the fuselage 2.

As is shown best in Figs. 6, 7, and 10, which show a cross-sectional view of one of the rear propulsion devices 8, 9 , the shroud 82, 92 comprises an intake opening 82A, 72A and an axially spaced exhaust opening 82B, 92B. The propeller 81, 91 comprises blades 81A, 91A mounted to a rotatable shaft 81B, 91B. The rear propulsion devices 8, 9 optionally comprise a first propeller 81, 91 and an axially spaced second counter rotating propeller (not shown). The first propeller 81, 91 and the optional second propeller (not shown) are mounted within the shroud 82, 92 by means of at least one strut 83, 93 which extends radially inwards from an inner circumferential surface 82a, 92a of the shroud 82, 92. As exemplarily shown in Fig. 1, the rear propulsion devices 8, 9 may comprise three struts, respectively, which are circumferentially spaced at an angle of about 120 degrees. Of course, there may be provided a different number of struts 83, 93 with different angular spacing, for example two struts 83, 93, as exemplarily shown in Fig. 9. The struts 83, 93 are aerodynamically shaped. For example, the struts may be realized as blades so as to transform rotational energy of the fluid caused by the propeller 81, 91 into kinetic energy of the fluid. Further, the struts 83, 93 are hollow. This provides the advantage that mechanical and electrical service lines may be integrated within the struts 83, 93.

As exemplarily shown in Fig. 6, the housing or shroud 82, 92 may be realized with a profiled cross-sectional shape which is symmetrical with respect to the propulsion device longitudinal axis L8, L9. In particular, the cross-section may be arc shaped.

Alternatively, as shown in Figs. 7, 8, and 10, the shroud 82, 92 may be geometrically divided with respect to the a dividing plane E comprising the propulsion device longitudinal axis L8, L9. In this configuration, the shroud 82, 92 is divided in two sections with respect to its circumference. As exemplarily shown in Fig. 7 and 10, the cross-sectional shape of the shroud 82, 92, in particular the walls of the shroud 82, 92, may be realized arc shaped, that is, in the shape of a wing profile comprising a pressure side 82p, 92p and a suction side 82s, 92s, wherein at one side of the dividing plane E the suction side 82s, 92s faces towards the propulsion device longitudinal axis L8, L9 and at the opposite side of the dividing plane E the pressure side 82p, 92p faces towards the propulsion device longitudinal axis L8, L9. In particular, in the cruise position of the rear propulsion devices 8, 9 which is shown in Fig. 7, the pressure sides 82p, 92p of both sections of the shroud 82, 92 may face towards the pair of lower wings 51, 52 and the suction sides 82s, 92s of both sections of the shroud may face towards the upper wing device 53. In other words, the shroud 82, 92 may be divided in two sections along its circumference, wherein each section is formed by a half cylinder 103, 104 each of which comprising a circumferential expanse of about somewhat less than 180 degrees. A transition zone connects the two half cylinders 103, 104. Each half cylinder 103, 104 comprises a cross-sectional shape configured to generate lift when a fluid flows along the cylinder longitudinal L8, L9 axis. In particular, one of the half cylinders at its outer surface forms a pressure side 82p, 92p and at its inner surface forms a suction side 82s, 92s, as is exemplarily shown in Fig. 7 for half cylinder 103. The other half cylinder-in Fig. 7 the half cylinder 104 - forms a suction side 82s, 92s at its outer surface and at its inner surface forms a pressure side 82p, 92p. Thereby, a force F8, F9 may be generated when air is transported through the shroud 82, 92 by the propeller 81, 91, wherein the force F8, F9 comprises a vector component transverse to the propulsion device longitudinal axis L8, L9 and thus along the vertical direction V of the VTOL 1 in the cruise position of the rear propulsion devices 8, 9. Hence, in this exemplary configuration, the shroud 82, 92 comprises a cross-sectional shape configured to generate a force comprising a vector component substantially along the vertical direction V when air is drawn through the shroud 82, 92 by the propeller 81, 91 and when the pair of rear propulsion devices 8, 9 is in its cruise position. As is shown in Fig. 7, the force F8, F9 may also comprise a vector component along the propulsion device longitudinal axis L8, L9.

Alternatively to the orientation exemplarily shown in Fig. 7, in the cruise position of the rear propulsion devices 8, 9, the suction sides 82s, 92s may be oriented towards the lower wings 51, 52 and the pressure sides 82p, 92p may be oriented towards the upper wing 53, as is exemplarily shown in Fig. 10. As is shown in Fig. 10, this leads to a force F8, F9 which is oriented opposite as shown in Fig. 7. This force F8, F9 comprises a vector component along the substantially along the vertical direction V when air is drawn through the shroud 82, 92 by the propeller 81, 91 and when the pair of rear propulsion devices 8, 9 is in its cruise position. This component is oriented towards the lower wing and thus even reduces overall lift. As is shown in Fig. 10, the force F8, F9 may also comprise a vector component along the propulsion device longitudinal axis L8, L9. However, this configuration of the cross-sectional shape of the shroud 82, 92 provides the benefit that the force F8, F9 comprises vector component which is oriented along the longitudinal axis L and towards the front end portion 21 of the fuselage 2 when the rear propulsion devices 8, 9 are positioned in their take-off position. This advantageously helps to accelerate the VTOL 1 in a forward flight direction D. That is, depending on the orientation of the suction sides 82s, 92s and pressure sides 82p, 92p of the airfoil cross-sectional shape, the vector component along or substantially along the vertical direction leads to positive or negative lift in the cruise mode.

Also if the shroud 82, 92 is realized as a ring section, as exemplarily shown in Fig. 9, the cross-sectional shape of the walls of the shroud 82, 92 may be realized arc shaped, that is, in the shape of a wing profile comprising a pressure side and a suction side. In particular, the inner circumferential surface 82a, 92a of the shroud 82, 92 forms a pressure side and the outer circumferential surface of the shroud forms the suction side. Thus, also in this exemplary configuration, the shroud 82, 92 comprises a cross-sectional shape configured to generate force comprising a vector component substantially along the vertical direction V when air is drawn through the shroud 82, 92 by the propeller 81, 91 and when the pair of rear propulsion devices 8, 9 is in its cruise position.

As is schematically shown in Figs 2 and 3, the VTOL 1 optionally further comprises an electrical energy storage device 15, for example a battery or an accumulator. The storage device, for example, may be arranged in the interior of the fuselage 2. Further, the front propulsion devices 6, 7 and/or the rear propulsion devices 8, 9 may comprise an electrically drivable motor, respectively, which is electrically connected to the electrical energy storage device 15. Thereby, the front propulsion devices 6, 7 and/or the rear propulsion devices 8, 9 can be driven by means of electrical energy stored in the electrical energy storage device 15.

As is further shown in Figs. 2 and 3, the VTOL 1 optionally further comprises a charging system 16 for charging electrical energy storage device 15. As is exemplarily shown in Figs. 2 and 3, the charging system optionally comprises an internal combustion engine 17 driving an electric generator 18 which is electrically connected to the electrical energy storage device 15.

The optional skid device 10 comprises a pair of skids 11 being spaced apart from each other with respect to the wingspan direction W. In Figs. 1 to 3 only one skid 11 is shown due to the perspective angel of view. The skids 11 are mounted to a lower side of the fuselage 2, for example by means of skid supports 12 being spaced apart from each other with respect to the longitudinal axis L.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### LIST OF REFERENCE SIGNS

- 1: aerial vehicle
- 2: fuselage
- 3, 4: canard wings
- 5: closed wing structure
- 6, 7: front propulsion devices
- 8, 9: rear propulsion devices
- 10: skid device
- 11: skids
- 12: skid supports
- 15: electrical energy storage device
- 16: charging system
- 17: internal combustion engine
- 18: electric generator
- 21: front end portion of the fuselage
- 22: rear end portion of the fuselage
- 24: lower region of the fuselage
- 25: main body of the fuselage
- 25A: opening of the main body
- 26: door of the fuselage
- 50: vertical joint structure of closed wing structure
- 51, 52: lower wings of the closed wing structure
- 51A, 52A: end portions of the lower wings
- 53: upper wing device of the closed wing structure
- 53A: first end portion of the upper wing device
- 53B: second end portion of the upper wing device
- 53a, 53b: control surfaces of the upper wing device
- 54: first connector wing of vertical joint structure
- 55: second connector wing of vertical joint structure
- 56: vertical stabilizer
- 56a: steering rudder
- 57: first upper wing
- 57A: first end of the first upper wing
- 57B: second end of the first upper wing
- 58: second upper wing
- 58A: first end of the second upper wing
- 58B: second end of the second upper wing
- 61, 71: first propellers of the front propulsion devices
- 61A, 71A: blades
- 61B, 71B: shaft
- 62, 72: shrouds of the front propulsion devices
- 62a, 72a: inner circumferential surface of the shroud
- 62A, 72A: intake opening
- 62B, 72B: exhaust opening
- 63, 73: struts of the front propulsion devices
- 64, 74: gap region
- 80, 90: rotatable shaft
- 81, 91: first propellers of the rear propulsion devices
- 81A, 91A: blades
- 81B, 91B: shaft
- 82, 92: shrouds of the rear propulsion devices
- 82A, 92A: intake opening
- 82B, 92B: exhaust opening
- 82p, 92p: pressure side
- 82s, 92s: suction side
- 83, 93: struts of the rear propulsion devices
- 84, 94: gap region
- 101, 102: half shells
- 103, 104: half shells
- A3, A4: pivot axis
- A8, A9: pivot axis
- D: forward flight direction
- E: dividing plane along the propulsion device longitudinal axis L6, L7, L8, L9
- F3, F4: lift force
- F6, F7: lift force
- F8, F9: lift force
- F51, F52: lift force
- F53: lift force
- L: longitudinal axis
- L6, L7: propulsion device longitudinal axis
- L8, L9: propulsion device longitudinal axis
- S1: upper side
- S2: lower side
- T6, T7: direction of thrust of the front propulsion devices
- T8, T9: direction of thrust of the rear propulsion devices
- V: vertical direction
- W: wingspan direction

## Claims

1. An aerial vehicle (1), comprising:
a fuselage (2) defining a longitudinal axis (L) of the aerial vehicle (1);
a closed wing structure (5) coupled to the fuselage (2) comprising a pair of lower wings (51; 52) being coupled to the fuselage (2), an upper wing device (53) being spaced to the pair of lower wings (51; 52) with respect to the longitudinal axis (L) and with respect to a vertical direction (V) extending transverse to the longitudinal axis (L), and a vertical joint structure (50) including first and second connector wings (54; 55) connecting the pair of lower wings (51; 52) and the upper wing device (53);
a pair of front propulsion devices (6; 7) being coupled to the fuselage (2), wherein the pair of front propulsion devices (6; 7) comprises a direction of thrust (T6; T7) which is oriented substantially along the vertical direction (V); and
a pair of rear propulsion devices (8; 9) being pivotally coupled to the fuselage (2), wherein the pair of rear propulsion devices (8; 9) is arranged between the pair of lower wings (51; 52) and the upper wing device (53) with respect to the vertical direction (V) and with respect to the longitudinal axis (L), and wherein the pair of rear propulsion devices (8; 9) is pivotal between a take-off position, in which a direction of thrust (T8; T9) of the pair of rear propulsion devices (8; 9) is oriented substantially along the vertical direction (V), and a cruise position, in which the direction of thrust (T8; T9) of the pair of rear propulsion devices (8; 9) is oriented substantially along the longitudinal axis (L).

2. The aerial vehicle (1) according to claim 1, further comprising a pair of canard wings (3; 4) being coupled to the fuselage (2), wherein the pair of front propulsion devices (6; 7) are arranged adjacent to the pair of canard wings (3; 4) with respect to the longitudinal axis (L).

3. The aerial vehicle (1) according to claim 2, wherein the pair of canard wings (3; 4) is pivotally mounted to the fuselage (2).

4. The aerial vehicle (1) according to one of the preceding claims, further comprising a vertical stabilizer (56) which extends substantially along the vertical direction and couples the upper wing device (53) of the closed wing structure (5) to the fuselage (2).

5. The aerial vehicle (1) according to claim 4, wherein the upper wing device (53) comprises a first upper wing (57) and a second upper wing (58), wherein the first upper wing (57) extends between the vertical stabilizer (56) and the first connector wing (54), and wherein the second upper wing (58) extends between the vertical stabilizer (56) and the second connector wing (55).

6. The aerial vehicle (1) according to one of the preceding claims, further comprising a skid device (10) mounted to a lower side of the fuselage (2).

7. The aerial vehicle (1) according to one of the preceding claims, wherein the front propulsion devices (6; 7) are realized as shrouded propellers.

8. The aerial vehicle (1) according to claim 7, wherein the shrouded propellers comprise a ring shaped shroud (62; 72) which comprises a cross-sectional shape configured to generate a force (F6; F7) comprising a vector component along the longitudinal axis (L) when air is drawn through the ring shaped shroud (62; 72) by the propeller (61; 71).

9. The aerial vehicle (1) according to one of the preceding claims, wherein the rear propulsion devices (8; 9) are realized as shrouded propellers.

10. The aerial vehicle (1) according to claim 9, wherein the shrouded propellers comprise a ring shaped shroud (82; 92) which comprises a cross-sectional shape configured to generate a force (F8; F9) comprising a vector component substantially along the vertical direction (V) in case air is drawn through the ring shaped shroud (82; 92) by the propeller (81; 91) and in case the pair of rear propulsion devices (8; 9) is in its cruise position.

11. The aerial vehicle (1) according to one of the claims 7 to 10, wherein the front propulsion devices (6; 7) and/or the rear propulsion devices (8; 9) comprise a first propeller (61; 71; 81; 91) which is configured to rotate in a first rotation direction and a second propeller (63; 73; 83; 93) which is configured to rotate in a second rotation direction contrary to the first rotation direction.

12. The aerial vehicle (1) according to one of the preceding claims, further comprising an electrical energy storage device (15), wherein the front propulsion devices (6; 7) and/or the rear propulsion devices (8; 9) comprise an electrically drivable motor, respectively, electrically connected to the electrical energy storage device (15).

13. The aerial vehicle (1) according to claim 12, further comprising a charging system (16) for charging electrical energy storage device (15), wherein the charging system preferably comprises an internal combustion engine (17) driving an electric generator (18) which is electrically connected to the electrical energy storage device (15).

14. The aerial vehicle (1) according to one of the preceding claims, further comprising one or more deployable parachutes.
